# FASCICULE DE BREVET EUROPEEN

(11) **EP 0 673 039 B1**
(45) Date de publication et mention de la délivrance du brevet: **27.08.1997**
(21) Numéro de dépôt: 95400535.1
(22) Date de dépôt: 13.03.1995
(51) Int. Cl.: G21C 3/334

(54) **Dispositif de maintien d'un tube de guidage pour assemblage combustible nucléaire**
Vorrichtung zur Halterung eines Leitrohrs in einem Kernbrennstabbündel
Guide tube retaining device for nuclear fuel assembly

(30) Priorité: 15.03.1994 US 214713
(43) Date de publication de la demande: 20.09.1995
(73) Titulaire: B & W FUEL COMPANY, Lynchburg, VA 24506-0935 (US)
(72) Inventeur: Attix, Douglas Jeffrey, Lynchburg, VA 24502 (US)
(74) Mandataire: Armengaud Ainé, Alain

(56) Documents cités:
- EP-A- 0 401 083
- EP-A- 0 493 201
- US-A- 2 823 932
- US-A- 3 183 297
- US-A- 3 769 158
- US-A- 4 036 692
- US-A- 4 366 116

## Description

### ARRIERE-PLAN DE L'INVENTION

### 1. Champ de l'invention

L'invention se rapporte de façon générale à des assemblages combustibles nucléaires et, plus particulièrement, à un dispositif de verrouillage réutilisable, destiné à des tubes de guidage et à des ensembles d'ajustement de l'extrémité supérieure et/ou inférieure de ces tubes.

### 2. Arrière-plan général

Dans un coeur de réacteur nucléaire, chaque assemblage combustible est ajusté avec un certain nombre de tubes de guidage qui sont utilisés pour recevoir des barres de contrôle. Dans l'industrie nucléaire, les tubes qui sont utilisés pour recevoir ces barres de contrôle sont référencés comme « tubes de guidage » ou « tubes chaussettes » la structure interne supérieure à laquelle ces tubes sont fixés étant référencée comme un ensemble d'ajustement d'extrémité supérieure ou buse d'injection supérieure, selon le fabricant. En conséquence, il sera compris que les références à un tube de guidage et à un ensemble d'ajustement d'extrémité supérieure devront être considérées ici comme se référant également à un tube chaussette et à une buse d'injection supérieure.

Les tubes de guidage ont une épaisseur de paroi relativement mince et requièrent ainsi un manchon au niveau de l'extrémité supérieure pour fournir le support nécessaire à des points de fixation et des butées à épaulement. Pendant l'assemblage, les tubes de guidage sont insérés dans les grilles d'écartement.

L'ensemble d'ajustement d'extrémité est alors aligné avec les manchons d'extrémité supérieure des tubes de guidage, reçu sur ces manchons, et fixé sur eux. De façon typique, les ensembles d'ajustement d'extrémité supérieure et les manchons sont fixés l'un à l'autre en utilisant des joints filetés et des coupelles de verrouillage.

Quand il devient nécessaire de retirer un ensemble d'ajustement d'extrémité supérieure d'un assemblage combustible irradié ou une buse d'injection au niveau du site du réacteur, le travail doit être effectué avec un outillage commandé à distance sous l'eau. Cela aboutit à la manipulation d'un certain nombre de pièces et fournit la possibilité d'un vissage transversal des dispositifs de fixation pendant l'installation.

La manipulation à distance d'un certain nombre de pièces sous l'eau augmente la possibilité de perdre des pièces dans le système, ce qui peut endommager le réacteur et augmenter le temps de travail.

Des brevets antérieurs concernent des ensembles de maintien d'un ensemble d'ajustement d'extrémité pour assemblage combustible nucléaire, que le demandeur entend inclure dans ce qui suit.

Le brevet U.S. N° 3 769 158 décrit l'utilisation d'un ensemble d'ajustement d'extrémité au-dessus des tiges de combustible où un rétrécissement réduit, s'étendant à travers l'ouverture de cet ensemble, comporte des bagues à fentes élastiques dans des gorges et engagent cet ensemble d'ajustement d'extrémité.

Le brevet U.S. N° 3 828 868 décrit des tubes de guidage qui sont fixés par vissage à l'ensemble d'ajustement d'extrémité.

Le brevet U.S. N° 4 699 761 décrit l'utilisation d'un manchon fileté sur l'extrémité supérieure du tube de guidage.

### RESUME DE L'INVENTION

L'invention concerne le besoin précédent et propose un dispositif de verrouillage selon la revendication 1. Ce qui est prévu est un dispositif de verrouillage peu coûteux, réutilisable, d'une seule pièce, entre le tube de guidage et l'ensemble d'ajustement d'extrémité qui élimine toute perte des composants de fixation au niveau du site du réacteur. Un manchon de maintien est prévu pour coopérer avec le manchon d'extrémité du tube de guidage. Des fentes adjacentes à l'extrémité supérieure du manchon reçoivent des pattes rigides prévues sur le manchon d'extrémité pour maintenir ensemble ces manchons. Le manchon de maintien est formé d'un tube cylindrique qui comporte une pluralité de pattes flexibles espacées autour de la circonférence du tube, pratiquement dans la section médiane de ce tube. Des pattes inférieures facultatives servent à centrer le tube de guidage dans l'ensemble d'ajustement d'extrémité et fournissent une connexion plus rigide. Les pattes de la section médiane sont reçues contre les épaulements de fentes prévues le long des parois du trou de cet ensemble d'ajustement et servent à retenir le tube de guidage et cet ensemble dans leur position de mise en place. Le manchon de maintien est tourné pour forcer les pattes vers l'intérieur afin de permettre de retirer l'ensemble d'ajustement d'extrémité du tube de guidage.

### BREVE DESCRIPTION DES DESSINS

Pour une meilleure compréhension de la nature et des buts de la présente invention, référence sera faite à la description qui suit, prise en relation avec les dessins d'accompagnement dans lesquels les parties analogues sont données avec les mêmes chiffres de référence, et dans lesquels :

La figure 1 est une vue en coupe d'un tube de guidage installé dans un ensemble d'ajustement d'extrémité supérieure utilisant l'invention.

La figure 2 est une vue de dessus d'une partie d'un ensemble d'ajustement d'extrémité supérieure utilisé selon l'invention.

La figure 3 est une vue de dessus d'un manchon d'extrémité utilisé selon l'invention.

La figure 4 est une vue en perspective du manchon de maintien selon l'invention.

La figure 5 est une vue prise selon la ligne 5-5 de la figure 4.

### DESCRIPTION DETAILLEE DU MODE PREFERE DE REALISATION

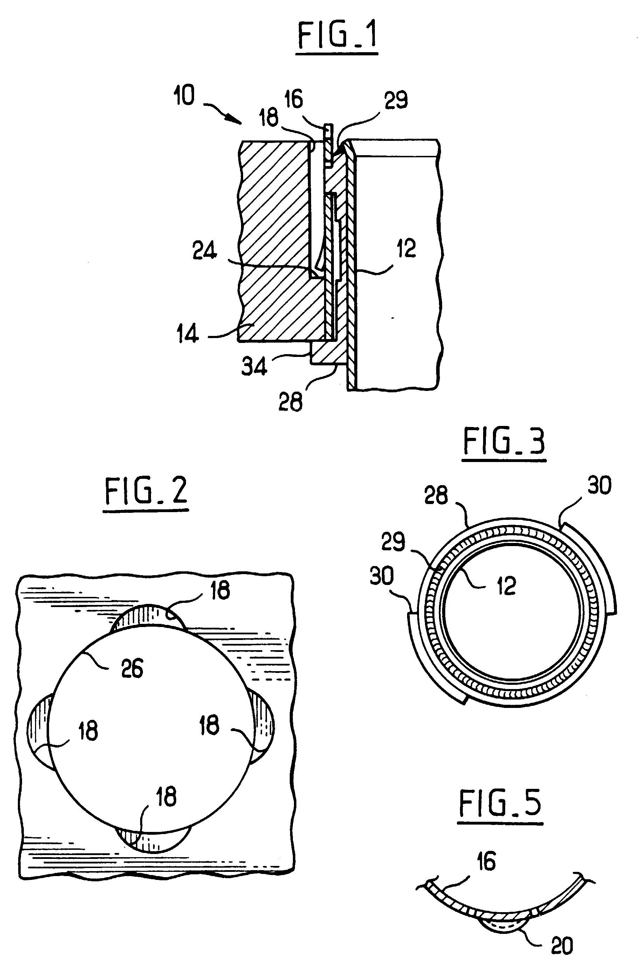

En se référant aux dessins, on observe sur la figure 1 que l'invention est désignée globalement par le chiffre 10.

Ce dispositif de verrouillage 10 est intégré à un tube de guidage 12 et est conçu pour être réutilisable, sans exiger la libération de pièces séparables du système. Ce dispositif de verrouillage 10 est globalement constitué d'un manchon de maintien 16, qui coopère avec des fentes 18 dans un ensemble d'ajustement d'extrémité supérieure 14, pour bloquer en même temps le tube de guidage et cet ensemble d'ajustement, dans leur position de mise en place.

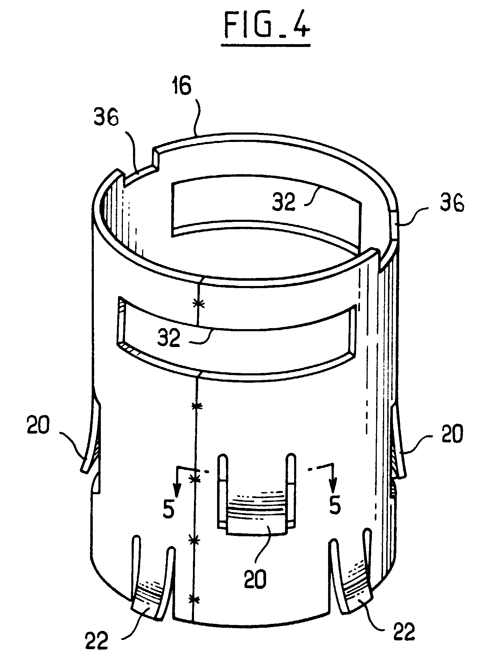

Comme montré dans la figure 4, le manchon de maintien 16 est formé d'un tube cylindrique, prévu avec une pluralité de premières pattes incurvées flexibles 20, qui s'étendent vers l'extérieur et sont espacées autour de la circonférence du tube, pratiquement au niveau de la section médiane de celui-ci. Les pattes 20 sont recourbées dans le mode préféré de réalisation montré sur la figure 5, pour conférer plus de souplesse à la mise en place.

Les secondes pattes 22, qui sont facultatives, sont placées au niveau de l'extrémité inférieure du tube et espacées autour de sa circonférence. Ces pattes 22 servent à centrer l'ensemble du tube de guidage 12 dans le trou à travers l'ensemble d'ajustement 14 et fournissent une connexion plus rigide. Les pattes 20 servent à maintenir le tube de guidage 12 et l'ensemble d'ajustement d'extrémité supérieure 14 dans leur position de mise en place l'un par rapport à l'autre.

Dans cette position, les pattes 20 s'étendent vers l'extérieur, juste au-dessus de l'épaulement 24 défini au niveau de l'extrémité inférieure de chaque fente 18. Cela empêche l'ensemble d'ajustement 14 de sortir du tube de guidage 12.

Comme observé sur les figures 1 et 2, l'ensemble d'ajustement d'extrémité supérieure 14 est prévu avec quatre fentes 18, s'étendant verticalement, qui sont espacées autour du trou 26 mais ne s'étendant pas sur toute la longueur de ce trou. Afin de fournir l'action de rappel élastique nécessaire, le manchon de maintien 16 est de préférence fait d'un matériau utilisé pour les ressorts et qui convient à une application dans un réacteur nucléaire, tel qu'un alliage de nickel 718.

Comme montré sur la figure 1, le tube de guidage 12 est muni d'un manchon d'extrémité supérieure 28, qui sert de point de fixation pour le manchon de maintien 16. Le manchon d'extrémité supérieure 28 peut être fixé au tube de guidage 12 par tout moyen convenable telle qu'une soudure, comme indiqué par le chiffre 29. Comme on l'observe mieux sur les figures 1, 3 et 4, le manchon de maintien 16 de l'invention est fixé au manchon d'extrémité supérieure 28 en utilisant des barrettes ou des pattes rigides 30, qui s'étendent autour d'une partie de la circonférence de ce manchon d'extrémité supérieure. Le manchon de maintien 16 est muni de fentes 32, qui sont dimensionnées pour recevoir les pattes 30. Pour fournir une connexion permanente, le manchon de maintien 16 peut également être fixé au manchon d'extrémité supérieur 28, suivant toute méthode adéquate, telle qu'une brasure ou un soudage.

Puisque les tubes de guidage sont habituellement relativement minces (approximativement 19 mils), le manchon d'extrémité supérieur est normalement incorporé au tube de guidage afin de fournir un point de fixation à l'ensemble d'ajustement et de procurer le support nécessaire pour une butée à épaulement 34, vue sur la figure 1, afin d'empêcher l'ensemble d'ajustement de se déplacer vers le bas du tube de guidage, lorsque l'assemblage combustible se trouve dans la position verticale.

Pendant l'assemblage, l'ensemble d'ajustement d'extrémité supérieure 14 est poussé sur le manchon d'extrémité supérieure 28 et le manchon 16. Les pattes 20 et 22 sont forcées vers l'intérieur lorsque l'ensemble d'ajustement d'extrémité coulisse sur le tube de guidage.

Lorsque l'ensemble d'ajustement 14 est complètement en appui, un outil de commande en rotation, (non montré), est reçu dans les fentes de montage 34, sur l'extrémité supérieure du manchon de maintien 16. Cet outil est utilisé pour faire tourner le manchon de maintien 16 jusqu'à ce que les pattes 20 fassent saillie à l'extérieur, dans les fentes 18 de l'ensemble d'ajustement 14. La présence des pattes 20 au niveau des épaulements 24 sert à retenir l'ensemble d'ajustement 14 et le tube de guidage 12 dans leurs positions relatives de mise en place.

Les pattes 22 maintiennent la pression contre les parois du trou 26 à travers l'ensemble d'ajustement 14 pour maintenir le tube 12 dans une position centrée et fournir une connexion plus rigide.

Le retrait de l'ensemble d'ajustement 14 est effectué en engageant un outil de rotation avec les fentes d'outillage 36 et en faisant tourner le manchon de maintien 16 de 45° environ, pour forcer les pattes 20 vers l'intérieur et ensuite faire coulisser l'ensemble d'ajustement 14 vers le haut. Comme observé sur la figure 2, les fentes 18 sont, de préférence, semi-circulaires pour faciliter l'opération, afin de forcer les pattes 20 vers l'intérieur pendant la rotation du manchon 16.

Parce que de nombreux de modes de réalisation divers et variés peuvent être réalisés dans le domaine de l'invention ici envisagée et parce que de nombreuses modifications peuvent être réalisées dans le mode d'exécution détaillé ici, on peut comprendre que les détails doivent être ici interprétés comme illustratifs et non dans un sens limitatif.

En particulier, le dispositif de verrouillage considéré, plus spécialement décrit avec un montage à l'extrémité supérieure du tube de guidage, pourrait de même être prévu à la partie inférieure de celui-ci.

## Revendications

1. Dispositif de verrouillage réutilisable d'une seule pièce (10) pour assemblage combustible, comportant un ensemble d'ajustement d'extrémité (14) possédant une pluralité de trous (26) le traversant, chacun étant dimensionné pour recevoir un tube de guidage (12) de barre de contrôle, ce tube de guidage comportant un manchon d'extrémité supérieur (28) avec un épaulement (34) s'étendant radialement au niveau de son extrémité inférieure, entre le tube de guidage (12) et l'ensemble d'ajustement d'extrémité (14), caractérisé en ce que :
a) ledit manchon d'extrémité (28) comporte au moins deux pattes rigides (30) qui s'étendent radialement vers l'extérieur ; et
b) ledit ensemble d'ajustement d'extrémité comporte une pluralité de fentes verticales (18) qui s'étendent le long d'une partie de la paroi de chaque trou,
c) un tube cylindrique concentrique (16) audit manchon d'extrémité (28) ayant au moins deux fentes dimensionnées (32) de façon à recevoir lesdites pattes (30) situées sur le manchon d'extrémité et une pluralité de pattes flexibles (20) s'étendant vers l'extérieur et espacées circonférentiellement, pratiquement au niveau de la section médiane dudit tube, de telle sorte que ces pattes, au niveau de cette section médiane, soient reçues dans lesdites fentes verticales (18) de l'ensemble d'ajustement d'extrémité.

2. Dispositif de verrouillage selon la revendication 1, caractérisé en ce que ledit tube cylindrique (16) comporte de plus, au moins deux fentes de montage (36) au niveau de son extrémité supérieure.

3. Dispositif de verrouillage selon la revendication 1, caractérisé en ce que ledit tube cylindrique comporte une pluralité de pattes flexibles (22) qui s'étendent vers l'extérieur et qui sont espacées autour de la circonférence de l'extrémité inférieure dudit tube cylindrique.

4. Dispositif de verrouillage selon l'une quelconque des revendications 1 à 3, caractérisé en ce que l'ensemble d'ajustement (14) est prévu à la partie supérieure ou inférieure du tube (12).

## Patentansprüche

1. Einstückige, wiederverwendbare Verriegelungsvorrichtung (10) für Brennstabbündel, die eine Anordnung zur Endeinstellung (14) aufweist, die eine Vielzahl sie durchsetzende Öffnungen (26) besitzt, wobei jede für die Aufnahme eines Steuerstabführungsrohres (12) bemessen ist, wobei dieses Führungsrohr eine obere Endhülse (28) mit einem Vorsprung (34) aufweist, der sich radial auf Höhe ihres unteren Randes, zwischen dem Führungsrohr (12) und der Anordnung zur Endeinstellung (14), erstreckt, dadurch gekennzeichnet, daß:
a) die Endhülse (28) wenigstens zwei starre Laschen (30) aufweist, die sich radial nach außen erstrecken; und
b) die Anordnung zur Endeinstellung eine Vielzahl senkrechter Spalte (18) aufweist, die sich entlang eines Abschnittes der Wand jeder Öffnung erstrecken,
c) wobei ein zylindrisches, zur Endhülse (28) konzentrisches Rohr (16) wenigstens zwei Spalte (32), die zur Aufnahme der an der Endhülse angeordneten Laschen (30) bemessen sind, und eine Vielzahl flexibler Laschen (20) aufweist, die sich nach außen erstrecken und entlang des Umfanges beabstandet, praktisch auf Höhe des Mittelabschnittes des Rohres derart angeordnet sind, daß die Laschen, auf Höhe dieses Mittelabschnittes, in den senkrechten Spalten (18) der Anordnung zur Endeinstellung aufgenommen werden.

2. Veriegelungsvorrichtung nach Anspruch 1, dadurch gekennzeichnet, daß das zylindrische Rohr (16) zusätzlich wenigstens zwei Montagespalte (36) auf Höhe seines oberen Randes aufweist.

3. Verriegelungsvorrichtung nach Anspruch 1, dadurch gekennzeichnet, daß das zylindrische Rohr eine Vielzahl flexibler Laschen (22) aufweist, die sich nach außen erstrecken und die entlang des Umfangs des unteren Randes des zylindrischen Rohres beabstandet angeordnet sind.

4. Verriegelungsvorrichtung nach einem der Ansprüche 1 bis 3, dadurch gekennzeichnet, daß die Anordnung zur Einstellung (14) am oberen oder am unteren Abschnitt des Rohres (12) vorgesehen ist.

## Claims

1. Integral reusable locking apparatus (10) for a fuel assembly comprising an upper end fitting (14) with a plurality of bores therethrough (26) each being sized to receive one control rod guide tube assembly (12), said guide tube assembly including an upper end sleeve (28) having a radially extending shoulder (34) at the lower end, between the guide tube assembly (12) and the upper end fitting (14) characterized in that :
a. said upper end sleeve (28) comprises at least two rigid tabs (30) that extend radially outward;
b. said upper end fitting includes a plurality of vertical slots (18) that extend along a portion of the wall of each bore;
c. a cylindrical tube (16) concentric with said upper end sleeve (28) having at least two slots (32) sized to receive said tabs (30) on said upper end sleeve and a plurality of flexible tabs (20) extending outwardly and circumferentially spaced apart substantially at the mid section of said tube such that said tabs at the mid section of said tube are received in said vertical slots (18) in the upper end fitting.

2. Locking apparatus according to claim 1, characterized in that said cylindrical tube (16) comprises at least two tooling slots (36) at the upper end thereof.

3. Locking apparatus according to claim 1, characterized in that said cylindrical tube has a plurality of flexible tabs (22) that extend outwardly and are spaced apart around the circumference of the lower end of said cylindrical tube.

4. Locking apparatus according to any of claims 1-3, characterized in that said upper end fitting (14) is provided at the upper or lower part of the tube (12).
